# EUROPÄISCHE PATENTSCHRIFT

(11) **EP 1 209 407 B1**
(45) Veröffentlichungstag und Bekanntmachung des Hinweises auf die Patenterteilung: **26.04.2006**
(21) Anmeldenummer: 01123110.7
(22) Anmeldetag: 27.09.2001
(51) Int. Cl.: F16M 11/04

(54) **Deckenstativeinheit**
Ceiling mount
Support fixé au plafond

(30) Priorität: 22.11.2000 DE 10058123
(43) Veröffentlichungstag der Anmeldung: 29.05.2002
(73) Patentinhaber: Wella Aktiengesellschaft, 64274 Darmstadt (DE)
(72) Erfinder: Knappe, Stefan, 36151 Burghaun (DE); Brähler, Manfred, 36137 Grossenlüder (DE)

(56) Entgegenhaltungen:
- EP-A- 0 496 994
- DE-A- 4 217 128

## Beschreibung

Die Erfindung betrifft eine Deckenstativeinheit nach der Gattung des Oberbegriffs des Anspruchs 1.

Eine die Gattung bildende Deckenstativeinheit ist aus der EP0496994A1 bekannt. Dadurch, dass ein Gewindelspindelantrieb mit einem Elektromotor und einem Schneckenradgetriebe eine Verlängerung eines Schwenkarms bildet, ist der Elektromotor weit außerhalb eines Drehlagerteils angeordnet, wodurch dieser störend im Raum steht (große seitliche Baulänge) und schwer zu reinigen bzw. zu desinfizieren ist, was insbesondere im medizintechnischen Einsatz aus hygenischen Gründen von Nachteil ist. Da der Elektromotor beim Verstellen ausschwenkt, ist eine große Verkleidung beziehungsweise ein großer Bauraum erforderlich. Außerdem ist als ein zweiter Energieträger eine Gasdruckfeder notwendig, die nicht nur teuer ist, sondern auch je nach Höhenposition unterschiedlich empfindlich auf Wärme und Kälte reagiert.

Der Erfindung liegt daher die Aufgabe zu Grunde, eine gattungsgleiche Deckenstativeinheit zu schaffen, die diese Nachteile nicht aufweist.

Diese Aufgabe wird nach den Merkmalen des kennzeichnenden Teils des Anspruchs 1 gelöst. Weitere vorteilhafte Ausbildungen der Erfindung gehen aus den Unteransprüchen hervor.

Ein Ausführungsbeispiel der Erfindung ist in den Figuren dargestellt und wird im folgenden näher erläutert.

Es zeigt:
- Fig. 1: in einer Seitenansicht in einem Längsschnitt eine Deckenstativeinheit;
- Fig. 2: in einer Draufsicht in einem Höhenschnitt die Deckenstativeinheit nach der Fig. 1;
- Fig. 3: eine Seitenteilansicht der Deckenstativeinheit nach der Fig. 2;
- Fig. 4: in einer vergrößerten Darstellung eine weitere Seitenteilansicht der Deckenstativeinheit nach der Fig. 3; und
- Fig.5 und 6: in einer Prinzipdarstellung eine Kurvensteuerungseinrichtung.

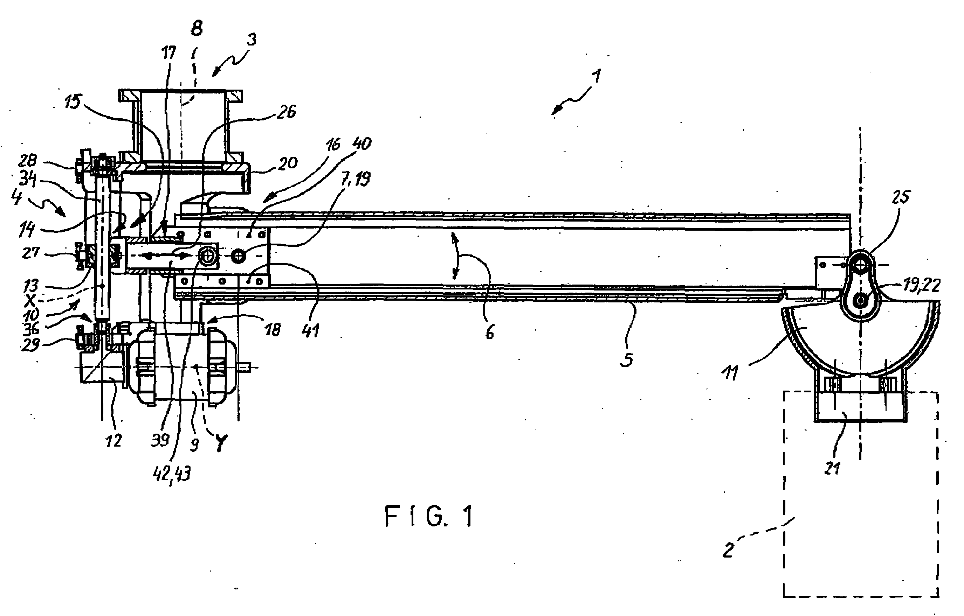

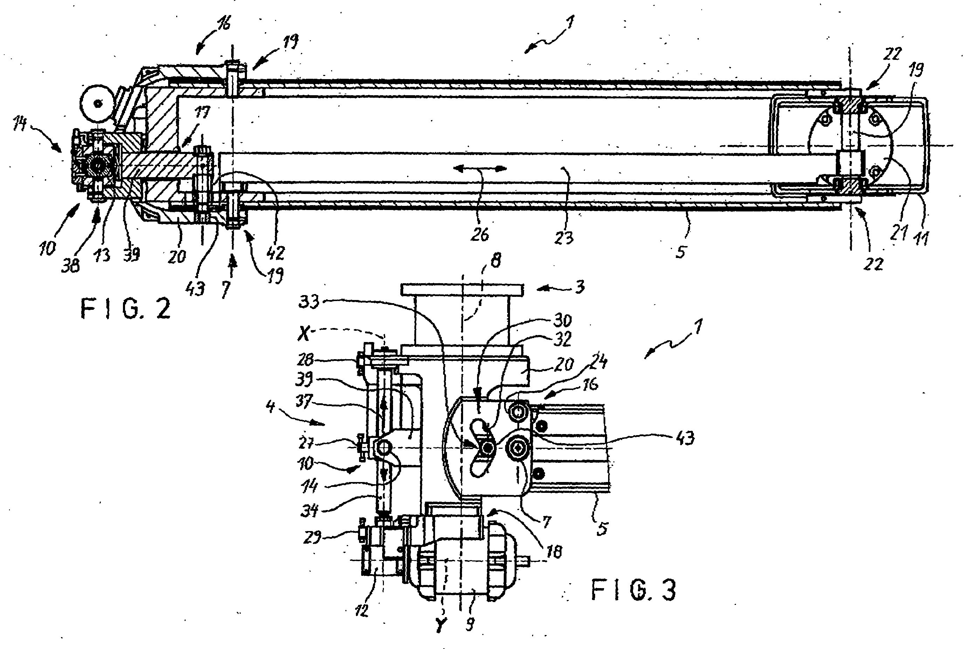

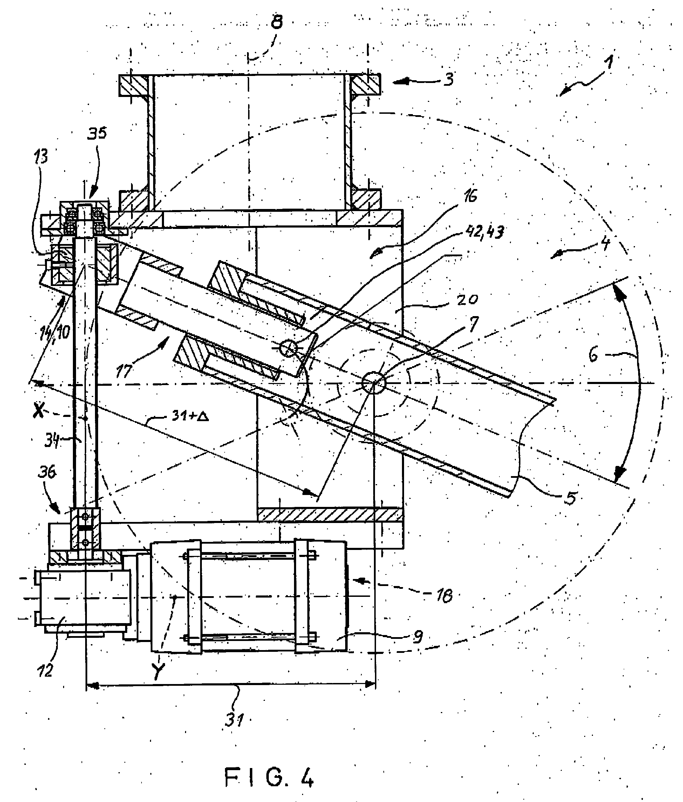

Die Fig. 1 bis 4 zeigen in verschiedenen Darstellungen eine Deckenstativeinheit 1 zum Bewegen und Positionieren von Gegenständen 2 in einem Raum, bestehend aus einer Deckenbefestigungseinrichtung 3, einem Drehlagerteil 4, einem sich daran anschließenden Schwenkarm 5 für vertikale Bewegungen 6 um eine Hauptachse 7 nahe einer vertikalen Drehachse 8 des Drehlagerteils 4 mittels eines von einem Elektromotor 9 über ein Schneckenradgetriebe 12 angetriebenen Gewindelspindelantriebs 10, und einem Lastteil 11 am Ende des Schwenkarms 5 zum Tragen der Gegenstände 2. Der Elektromotor 9 mit dem Schneckenradgetriebe 12 und der Gewindespindelantrieb 10 mit der Gewindespindel (34) sind miteinander ortsfest verbunden. Die Gewindespindel 34 ist mit einer Achse (X) parallel zur vertikalen Drehachse 8 des Drehlagerteils 4 und der Elektromotor 9 ist mit einer Motorachse (Y) im rechten Winkel zu der Drehachse 8 angeordnet, wodurch sich eine kompakte Antriebseinheit ergibt. Eine Gewindespindelmutter 13 bildet mittels einer Kardan-Verbindung 14 den vertikalen Antrieb 15 des Schwenkarms 5 um die Hauptachse 7, wobei zwischen der Kardan-Verbindung 14 und einem Anfangsabschnitt 16 des Schwenkarms 5 eine Teleskoparmverbindung 17 vorgesehen ist. An dem Drehlagerteil 4 ist der Elektromotor 9 mittels einer Schraubverbindung 18 befestigt, Der Schwenkarm 5 ist als Aluminium-Strangpressprofil ausgebildet und ist mittels Steckachsen 19 vertikal drehbar um die Hauptachse 7 am Gehäuse 20 des Drehlagerteils 4 befestigt. Am Lastteil 11 des Schwenkarms 5 ist ein Kopfmanschettenteil 21 vertikal drehbar montiert. Die Montage des Lastteils 11 erfolgt mittels einer Steckachse 19 und entsprechenden Lagerteilen 22. Um sicherzustellen, dass bei der vertikalen Schwenkbewegung 6 das Kopfmanschettenteil 21 lotrecht ausgerichtet bleibt, ist eine Parallelführungsstange 23 montiert, die am Gehäuse 20 mittels eines Befestigungsbolzens 24 und am Kopfmanschettenteil 21 durch eine weitere Steckachse 25 drehbar befestigt ist. Die Parallelführungsstange 23 vollzieht während der vertikalen Schwenkbewegung 6 zwangsweise eine Linearbewegung 26. Eine lotrechte Feinjustage des Kopfmanschettenteils 21 erfolgt über eine Einstellung eines Excenters an dem Befestigungsbolzen 24 der Parallelführungsstange 23. Die vertikale Schwenkbewegung 6 des Schwenkarms 5 wird im Zusammenspiel eines Mitnehmers 27 an der Gewindelspindelmutter 13 mittels eines ersten Endschalters 28 in einer obere Position und mittels eines zweiten Endschalters 29 in einer unteren Position begrenzt. Die Endschalter 28,29 unterbrechen die Stromversorgung des Elektromotors 9, wodurch dieser gestoppt wird.

Eine Kurvensteuerungseinrichtung 30 gleicht einen variablen Abstand 31 zwischen der Hauptachse 7 bzw. der Drehachse 8 und der Gewindespindelmutter 13 stetig aus. Die Kurvensteuerungseinrichtung 30 ist mit einer Kulissenkurve 32 in Form einer Hyperbel versehen. Die Kulissenkurve 32 ist mit einer Bolzenführung 33 versehen.

Der ortsfest montierte Schwenkantrieb bzw. vertikale Antrieb 15 besteht aus einem Elektromotor 9 mit einem Schneckenradgetriebe 12 sowie einem Gewindespindelantrieb 10. Die Montage der Motor-/Getriebe-Einheit ist durch die Schraubverbindung 18 am Gehäuse 20 realisiert. Eine Gewindespindel 34 ist am oberen Ende axial und radial in Form eines Festlagers 35 gelagert. Hier werden die Gewindespindelkräfte aufgenommen und an das Gehäuse 20 weitergeleitet. Die Drehbewegung des Elektromotors 9 wird über das Schneckenradgetriebe 12 mittels einer Kupplung 36 an die Gewindespindel 34 übertragen. Die Transformation der Drehbewegung in eine lineare, vertikale Hubbewegung 37 wird durch das Eingreifen der Gewindespindelmutter 13 auf die Gewindespindel 34 ermöglicht.

Durch die mechanische Verbindung der Gewindespindelmutter 13 mit der Kardan-Verbindung 14 kann die lineare Hubbewegung 37 an den Schwenkarm 5 übertragen werden, um die Schwenkbewegung des Schwenkarms 5 um die Hauptachse 7 zu ermöglichen. Dies ist durch die Steckbolzenverbindung 38 zu einer Gabel 39, die in Verbindung zum Schwenkarm 5 mittels einer Anschlussgabel 40 steht, ausgeführt. Die Anschlussgabel 40 wird mit zwei Klemmleisten 41 form- und kraftschlüssig mit dem Schwenkarmprofil 5 montiert. Die Verbindung zwischen der Gabel 39 und der Anschlussgabel 40 ist als Linearführung ausgeführt, um der Gabel 39 einen linearen Freiheitsgrad (Linearbewegung 26) zu verschaffen. Radial wird die Gabel 39 durch eine Laufhülse 42 in der Anschlussgabel 40 abgestützt. Bedingt durch den ortsfest montierten Gewindespindelantrieb 10 muss eine lineare Streckenanpassung des Abstandes 31 zwischen der Gewindespindel 34 und der Hauptachse 7 während der Schwenkbewegungen 6 des Schwenkarms 5 erfolgen. Dies wird durch die Linearbewegung 26 der Gabel 39 erzielt und durch die Kurvensteuerungseinrichtung 30 mit einer Laufrolle 43 bzw. Bolzenführung 33 mit der Kulissenkurve 32 gesteuert. Dadurch wird der Positionsfehler der Gabel 39 zur Gewindespindel 34 während der Schwenkbewegung 6 kompensiert. Die Laufrolle 43 gibt die Funktion der Kurvensteuerungseinrichtung 30 über die Bolzenführung 33 an die Gabel 39 weiter. In der Gabel 39 ist die Gewindespindelmutter 13 montiert, so dass die Mutter 13 auf der Gewindespindel 34 laufen kann. Für einen reibungsarmen Lauf des Gewindspindelantriebs 10 ist eine hohe Genauigkeit der Kulissenkurve 32 bzw. der Bolzenführung 33 erforderlich.

Die Deckenstativeinheit 1 dient zum Transport, Positionieren und Versorgen (mit Strom und Gas) von medizintechnischen Geräten horizontal sowie vertikal im Raum und ist insbesondere für einen medizintechnischen Bereich ausgebildet. Durch axiale Lagereinheiten wird die horizontale und durch einen Elektromotor 9 mit dem Schneckenradgetriebe 12 sowie Gewindespindelantrieb 10 die vertikale Bewegung 6 bzw. Transport im Raum realisiert.

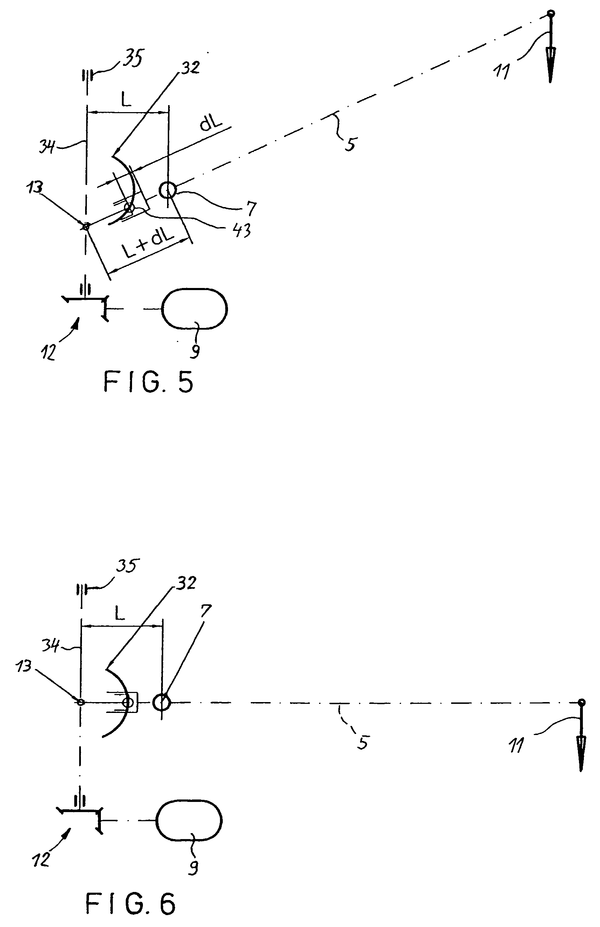

Die Fig. 5 und 6 zeigen das Prinzip der Kurvensteuerungseinrichtung 30 mit einer Kompensation des variablen Abstands 31 bzw. L und L+dL. Der Längenausgleich wird mit Hilfe einer Kulissenkurve 32 erreicht, um einen reibungsarmen Lauf des Gewindespindelantriebs 10 bzw. der Gewindespindelmutter 13 zu gewährleisten. Die Kurvensteuerungseinrichtung 30 besteht aus einer Laufrolle 43, die auf der Kulissenkurve 32 läuft und diese Bewegung an eine Linearführung weiterleitet, die die entsprechende Position der Mutter 13 zum Schwenkwinkel realisiert.

### Bezugsziffernliste:

- 1: Deckenstativeinheit
- 2: Gegenstand
- 3: Deckenbefestigungseinrichtung
- 4: Drehlagerteil
- 5: Schwenkarm
- 6: Vertikale Bewegung
- 7: Hauptachse
- 8: Vertikale Drehachse/Drehlagerteil
- 9: Elektromotor
- 10: Gewindelspindelantrieb
- 11: Lastteil
- 12: Schneckenradgetriebe
- 13: Gewindespindelmutter
- 14: Kardan-Verbindung
- 15: Vertikaler Antrieb
- 16: Anfangsabschnitt/Schwenkarm
- 17: Teleskoparmverbindung
- 18: Schraubverbindung
- 19: Steckachse
- 20: Gehäuse
- 21: Kopfmanschettenteil
- 22: Lagerteil
- 23: Parallelführungsstange
- 24: Befestigungsbolzen
- 25: Steckachse
- 26: Linearbewegung
- 27: Mitnehmer
- 28: Erster Endschalter
- 29: Zweiter Endschalter
- 30: Kurvensteuerungseinrichtung
- 31: Abstand
- 32: Kulissenkurve
- 33: Bolzenführung
- 34: Gewindespindel
- 35: Festlager
- 36: Kupplung
- 37: Hubbewegung
- 38: Steckbolzenverbindung
- 39: Gabel
- 40: Anschlussgabel
- 41: Klemmleiste
- 42: Laufhülse
- 43: Laufrolle
- X: Achse/Gewindespindel 34
- Y: Motorachse

## Patentansprüche

1. Deckenstativeinheit zum Bewegen und Positionieren von Gegenständen in einem Raum, bestehend aus einer Deckenbefestigungseinrichtung, einem Drehlagerteil, einem sich daran anschließenden Schwenkarm für vertikale Bewegungen um eine Hauptachse nahe einer vertikalen Drehachse des Drehlagerteils mittels eines von einem Elektromotor über ein Schneckenradgetriebe angetriebenen Gewindelspindelantriebs mit einer Gewindespindel, und einem Lastteil am Ende des Schwenkarms zum Tragen der Gegenstände, **dadurch gekennzeichnet, dass** der Elektromotor (9) des Schneckenradgetriebes (12) und der Gewindespindelantrieb (10) mit der Gewindspindel (34) miteinander ortsfest verbunden sind, wobei die Gewindespindel (34) mit einer Achse (X) parallel zur vertikalen Drehachse (8) des Drehlagerteils (4) und der Elektromotor (9) mit einer Motorachse (Y) im rechten Winkel zu der Drehachse (8) angeordnet sind, dass eine Gewindespindelmutter (13) mittels einer Kardan-Verbindung (14) den vertikalen Antrieb (15) des Schwenkarms (5) um die Hauptachse (7) bildet, wobei zwischen der Kardan-Verbindung (14) und einem Anfangsabschnitt (16) des Schwenkarms (5) eine Teleskoparmverbindung (17) vorgesehen ist.

2. Deckenstativeinheit nach Anspruch 1, **dadurch gekennzeichnet, dass** mittels einer Kurvensteuerungseinrichtung (30) ein variabler Abstand (31) zwischen der Hauptachse (7) bzw. der Drehachse (8) und der Gewindespindelmutter (13) stetig ausgeglichen ist.

3. Deckenstativeinheit nach Anspruch 2, **dadurch gekennzeichnet, dass** die Kurvensteuerungseinrichtung (30) mit einer Kulissenkurve (32) in Form einer Hyperbel versehen ist.

4. Deckenstativeinheit nach Anspruch 3, **dadurch gekennzeichnet, dass** die Kulissenkurve (32) mit einer Bolzenführung (33) versehen ist.

5. Deckenstativeinheit nach Anspruch 1, **dadurch gekennzeichnet, dass** die Deckenstativeinheit (1) für einen medizintechnischen Bereich ausgebildet ist.

6. Deckenstativeinheit nach Anspruch 1, **dadurch gekennzeichnet, dass** durch die Deckenstativeinheit (1) Versorgungsleitungen geführt sind.

## Claims

1. Ceiling mount for moving and positioning objects in a room, comprising a ceiling fastening device, a pivot bearing part, an adjoining swivel arm for vertical motions about a principal axis close to a vertical rotational axis of the pivot bearing part by means of a threaded spindle drive having a threaded spindle and driven by an electric motor via a worm gearing, and a load part at the end of the swivel arm for supporting the objects, **characterized in that** the electric motor (9) of the worm gearing (12) and the threaded spindle drive (10) having the threaded spindle (34) are fixedly connected to one another, the threaded spindle (34) being disposed with an axis (X) parallel to the vertical rotational axis (8) of the pivot bearing part (4) and the electric motor (9) being disposed with a motor axis (Y) at right angles to the rotational axis (8), and **in that** a threaded spindle nut (13) forms by means of a Cardan joint (14) the vertical drive (15) of the swivel arm (5) about the principal axis (7), a telescopic arm joint (17) being provided between the Cardan joint (14) and an initial portion (16) of the swivel arm (5).

2. Ceiling mount according to Claim 1, **characterized in that** a variable distance (31) between the principal axis (7) and rotational axis (8) and the threaded spindle nut (13) is constantly equalized by means of a cam control device (30).

3. Ceiling mount according to Claim 2, **characterized in that** the cam control device (30) is provided with a link cam (32) in the shape of a hyperbola.

4. Ceiling mount according to Claim 3, **characterized in that** the link cam (32) is provided with a bolt guide (33).

5. Ceiling mount according to Claim 1, **characterized in that** the ceiling mount (1) is designed for a medical-technology area.

6. Ceiling mount according to Claim 1, **characterized in that** supply lines are run through the ceiling mount (1).

## Revendications

1. Support fixé au plafond pour déplacer et positionner des objets dans un local, se composant d'un dispositif de fixation au plafond, d'une partie de palier de rotation, d'un bras pivotant se raccordant à celle-ci pour des mouvements verticaux autour d'un axe principal proche d'un axe de rotation vertical de la partie de palier de rotation au moyen d'un entraînement à broche filetée entraîné par une transmission à vis sans fin au moyen d'un moteur électrique, avec une broche filetée, et une partie de charge à l'extrémité du bras pivotant pour porter les objets, **caractérisé en ce que** le moteur électrique (9) de la transmission à vis sans fin (12) et l'entraînement à broche filetée (10) avec la broche filetée (34) sont assemblés en un endroit fixe l'un à l'autre, dans lequel la broche filetée (34) avec un axe (X) est disposée parallèlement à l'axe de rotation vertical (8) de la partie de palier de rotation (4) et le moteur électrique (9) avec un axe de moteur (Y) est disposé perpendiculairement à l'axe de rotation (8), **en ce qu'**un écrou de broche filetée (13) forme au moyen d'un joint à cardan (14) l'entraînement vertical (15) du bras pivotant (5) autour de l'axe principal (7), dans lequel il est prévu un assemblage à bras télescopique (17) entre le joint à cardan (14) et un segment initial (16) du bras pivotant (5).

2. Support fixé au plafond selon la revendication 1, **caractérisé en ce qu'**une distance variable (31) entre l'axe principal (7), respectivement l'axe de rotation (8), et l'écrou de broche filetée (13) est compensée en permanence au moyen d'un dispositif de commande par came (30).

3. Support fixé au plafond selon la revendication 2, **caractérisé en ce que** le dispositif de commande par came (30) est pourvu d'une coulisse de came (32) en forme d'hyperbole.

4. Support fixé au plafond selon la revendication 3, **caractérisé en ce que** la coulisse de came (32) est pourvue d'un guide de boulon (33).

5. Support fixé au plafond selon la revendication 1, **caractérisé en ce que** le support fixé au plafond (1) est conçu pour le domaine technique médical.

6. Support fixé au plafond selon la revendication 1, **caractérisé en ce que** des conduites d'alimentation sont guidées à travers le support fixé au plafond (1).
